# EUROPÄISCHE PATENTSCHRIFT

(11) **EP 1 051 528 B1**
(45) Veröffentlichungstag und Bekanntmachung des Hinweises auf die Patenterteilung: **16.01.2002**
(21) Anmeldenummer: 98964395.2
(22) Anmeldetag: 12.11.1998
(51) Int. Cl.: C22C 21/00, F16C 33/12, B32B 15/20

(54) **GLEITLAGERWERKSTOFF AUF ALUMINIUMBASIS MIT 10 BIS 25 MASSE-% ZINN UND ZUSÄTZE VON MANGAN UND SILIZIUM**
SLIDING BEARING MATERIAL BASED ON ALUMINIUM WITH 10-25 WT % TIN ALLOYED WITH MANGANESE AND SILICON
MATERIAU DE PALIER LISSE A BASE D'ALUMINIUM ET CONTENANT 10 A 25 % EN MASSE D'ETAIN ALLIE A DU MANGANESE ET DU SILICIUM

(30) Priorität: 15.11.1997 DE 19750740
(43) Veröffentlichungstag der Anmeldung: 15.11.2000
(73) Patentinhaber: KS Gleitlager GmbH, 68789 St. Leon-Rot (DE)
(72) Erfinder: STEFFENS, Thomas, D-74906 Bad-Rappenau (DE); SCHUBERT, Werner, D-69168 Wiesloch (DE)
(74) Vertreter: Friz, Oliver
(86) Internationale Anmeldenummer: EP9807234
(87) Internationale Veröffentlichungsnummer: WO9925886

(56) Entgegenhaltungen:
- DE-A- 4 312 537
- GB-A- 2 027 050
- GB-A- 2 271 779
- US-A- 4 806 308
- US-A- 5 470 666

## Beschreibung

Die Erfindung betrifft einen Gleitlagerwerkstoff aus Aluminiumlegierung mit 10 bis 25 Masse % Zinn.

Ein derartiger Gleitlagerwerkstoff ist beispielsweise aus der DE 40 04 703 A1 bekannt. Das einzige Ausführungsbeispiel lehrt eine Aluminiumlegierung mit der Zusammensetzung AlSn10Ni2Mn1Cu0,5, wobei anstelle des Zinnzusatzes auch ein Bleizusatz verwendet werden kann. Bei derartigen als Gleitlagerwerkstoff verwandten Aluminiumlegierungen wird eine "weiche Phase" in Form einer Zinn- oder auch Bleiausscheidung für die Gewährleistung guter Notlaufeigenschaften eines aus dem Gleitlagerwerkstoff hergestellten Lagers benötigt. Harte Schmutzpartikel oder Abrieb werden in dieser weichen Phase aufgenommen oder eingebettet. Die weiche Phase vermag sich auch geometrischen Bedingungen anzupassen. Die weiche Phase aus in Aluminium nicht löslichem Zinn ist in Form blockiger Ausscheidungen in dem matrixbildenden Aluminium aufgenommen.

Um die Festigkeit der Aluminiummatrix zu erhöhen, ist es bekannt, Kupfer zuzugeben. Kupfer bildet mit Aluminium intermetallische Phasen, sog. Hartstoffphasen, wie Al₂Cu und feinverteilte Vorstufen hiervon, die eine Erhöhung der Festigkeit der Aluminiummatrix bewirken, sofern sie in möglichst fein verteilten Ausscheidungen vorliegen (≤ 1 µm). Hierdurch wird die Belastbarkeit und Ermüdungsfestigkeit eines aus der Legierung gefertigten Gleitlagerwerkstoffs erhöht. Eine derartige Aluminiumlegierung AlSn15Cu2 ist unter dem Handelsnamen KS 985.3 durch die Anmelderin bekannt geworden. Diese Legierung besitzt bereits ausgezeichnete tribologische Eigenschaften; sie bedarf aber für Anwendungen unter Extremlastbedingungen, wie zum Beispiel als Pleuellager in modernen Brennkraftmaschinen, der Verbesserung.

Dies wurde bei der aus der DE 40 04 703 A1 bekannten Aluminiumlegierung durch die Zugabe von Mangan und Nickel zu erreichen versucht, wodurch der Anteil der Hartstoffphasen wohl erhöht werden sollte, und zwar nach Angaben dieser Druckschrift im Besonderen in der Umgebung der Zinnausscheidungen, um durch die Affinität des Zinns zu Nickel und zu Mangan eine verbesserte Bindung der Zinnausscheidung in der Aluminiummatrix zu erreichen.

Es besteht auch die Vorstellung, dass sich ein gewisser Anteil von Hartstoffphasen oder -ausscheidungen positiv auf einen guten Verschleißwiderstand auswirkt, indem die an der Oberfläche befindlichen Hartstoffphasen ein Feinschleifen des Gleitpartners, z.B. der Kurbelwelle, bewirken, so dass Rauheitsspitzen des aus Stahl bestehenden Gleitpartners abgetragen werden können. Auch werde durch Hartstoffphasen die Belastbarkeit des Lagerwerkstoffs erhöht.

Die Erhöhung des Anteils intermetallischer Hartstoffphasen bringt aber auch Probleme im Hinblick auf die Ermüdungsfestigkeit und auch im Hinblick auf die Herstellbarkeit mit sich. So treten beim Umformen, insbesondere beim Kaltplattieren der Aluminiumlegierung auf Stahl, was einen Stich von etwa 50 % Umformung erfordert, Risse auf.

Die US-A-4,471,029 beschreibt einen Aluminium-Silizium-Zinn-Gleitlagerwerkstoff mit 0,5 bis 5, vorzugsweise 2 bis 5 Masse-% Silizium und mit Zusätzen wenigstens eines der Elemente von Blei, Indium, Thallium, Cadmium, Wismuth, Kupfer, Magnesium, Chrom oder Mangan. Die Druckschrift lehrt die Ausbildung von elementaren Silizium-Ausscheidungen eines bestimmten Größenspektrums.

Der vorliegenden Erfindung liegt die Aufgabe zugrunde, eine Legierung der eingangs beschriebenen Art dahingehend zu verbessern, dass sie eine höhere Belastbarkeit als die bekannte Aluminium-Zinn-Kupfer oder Aluminium-Zinn-Kupfer-Nickel-Legierung und eine bessere Umformbarkeit, insbesondere Plattierbarkeit, aufweist.

Diese Aufgabe wird durch einen Gleitlagerwerkstoff der eingangs beschriebenen Art gelöst, bei dem die Aluminiumlegierung aus Zinn, Zugaben von Silizium und Mangan, Rest Aluminium besteht und Mangan und Silizium jeweils einen Anteil von 0,2 bis 2 Masse % aufweisen und das Verhältnis des masseprozentualen Anteils von Mangan zum masseprozentualen Anteil von Silizium zwischen 0,8 und 1,2 liegt.

Es versteht sich, dass die erfindungsgemäße Aluminiumlegierung als technische Legierung verunreinigungsbedingte Zusätze, aufweist. Hierunter werden Verunreinigungselemente bis üblicherweise maximal 0,2 Masse % je Element verstanden. In der Summe können verunreinigungsbedingte Zusätze bis zu etwa 1 Masse % enthalten sein.

Aus der US-A-5,470,666 ist zwar eine Aluminiumlegierung (als nicht bevorzugtes Vergleichsprodukt) bekannt, die aus Zinn, Silizium, Mangan, Rest Aluminium besteht; das Verhältnis der Anteile von Mangan zu Silizium liegt aber außerhalb des erfindungsgemäßen Bereichs.

Mit der Erfindung wurde erkannt, dass eine Zugabe von Mangan unter dem Gesichtspunkt einer Schwingfestigkeitserhöhung ohne die gleichzeitige Zugabe von Silizium nachteilig ist. So wurde z.Bsp. bei der Legierung AlSn12Cu1,5Mn1 erkannt, dass sie aufgrund relativ grober Mangan-Aluminide eine sehr schlechte Walzbarkeit aufweist.

Darüber hinaus führen derart grobe harte Ausscheidungen aufgrund ihrer inneren Verbindung zu reduzierten Schwing- oder Wechselfestigkeiten im Gleitlager.

Wenn die Aluminiumlegierung des erfindungsgemäßen Gleitlagerwerkstoffs nach der Erfindung außer Zinn nur Mangan und Silizium in dem angegebenen masseprozentualen Anteil sowie in dem angegebenen Verhältnis der masseprozentualen Anteile zueinander aufweist, so kann die intermetallische Phase Mn₃Si₂Al₁₅ gebildet werden, die dann in feiner verteilterer Form vorliegt, so dass die Legierung gut walzbar wird. Dabei hat sich der in den Patentansprüchen angegebene Bereich des Verhältnisses der masseprozentualen Anteile von Mangan und Silizium als vorteilhaft erwiesen, da es bei dieser Zusammensetzung bevorzugt zur Ausbildung der genannten intermetallischen Phase und nicht zur Ausscheidung von elementarem Silizium kommt. Eine nachteilige Auswirkung der nunmehr fein verteilten intermetallischen Phasen auf die Schwing- oder Wechselfestigkeit besteht nicht mehr. Mangan besitzt eine sehr hohe Affinität zu Silizium und wird hierdurch daran gehindert, sich im Zuge einer Wärmebehandlung zu verteilen und grobe Ausscheidungen zu bilden. Die Mangan-Silizium-Aluminide liegen daher auch nach einer Wärmebehandlung von 250 Grad fein verteilt vor. Die Ursache hierfür ist die äußerst geringe Löslichkeit von Silizium im Aluminiummischkristall.

Weitere Merkmale, Einzelheiten und Vorteile der Erfindung ergeben sich aus den nachfolgenden Schliffbildern von Gleitlagerwerkstoffen und deren Beschreibung. In den Zeichnungen zeigen:
- Figur 1: eine fotographische Schliffbilddarstellung eines erfindungsgemäßen Gleitlagerwerkstoffs und
- Figur 2: eine fotographische Schliffbilddarstellung eines Gleitlagerwerkstoffs.

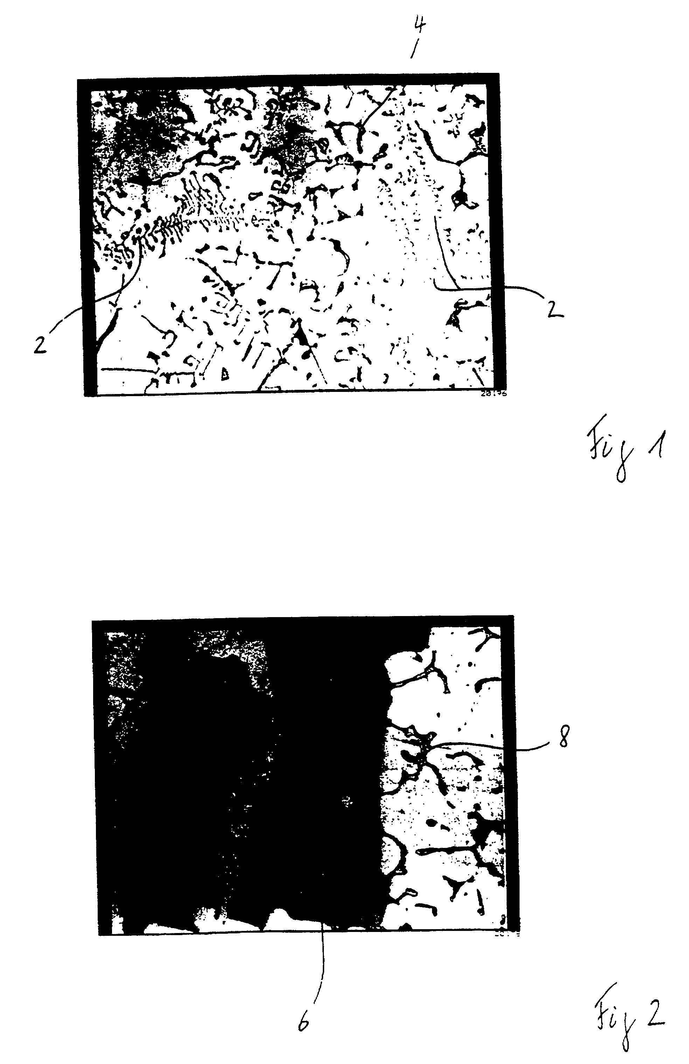

Figur 1 zeigt eine Schliffbilddarstellung eines erfindungsgemäßen Gleitlagerwerkstoffs aus der Aluminiumlegierung AlSn12Mn2Si2 im Gußzustand. Diese Legierung zeichnet sich dadurch aus, dass sie feinverteilte skelettartig aussehende und filigran anmutende Ausscheidungen 2 in Form der intermetallischen Phase Mn₃Si₂Al₁₅ aufweist. Daneben sind Zinn-Ausscheidungen 4 erkennbar. In Folge der feinen Verteilung dieser intermetallischen Phase 2 ist der Gleitlagerwerkstoff gut unformbar, insbesondere walzbar.

Figur 2 zeigt das Schliffbild eines Gleitlagerwerkstoffs aus der Aluminiumlegierung AlSn20Cu1,5Mn1. Man erkennt grobe, balkenartige Mangan-Aluminide 6, die ein zufriedenstellendes Umformen, insbesondere Walzen, ausschließen. Das Mangan in dieser Aluminiumlegierung scheidet sich in Folge der Abwesenheit von Silizium in Form der groben Mangan-Aluminide aus. Diese lassen sich auch durch eine anschließende Wärmebehandlung oberhalb 300°C nicht beseitigen. Das Bezugszeichen 8 bezeichnet Zinnauscheidungen.

## Patentansprüche

1. Gleitlagerwerkstoff aus Aluminiumlegierung mit 10 bis 25 Masse % Zinn, wobei die Aluminiumlegierung aus Zinn, Zusätzen von Silizium und Mangan, Rest Aluminium besteht und Mangan sowie Silizium jeweils einen Anteil von 0,2 bis 2 Masse % aufweisen und das Verhältnis des masseprozentualen Anteils von Mangan zum masseprozentualen Anteil von Silizium zwischen 0,8 und 1,2 liegt.

2. Gleitlagerwerkstoff nach Anspruch 1, **gekennzeichnet durch** die intermetallische Phase Mn₃Si₂Al₁₅ bildende Hartstoffausscheidungen.

3. Gleitlagerwerkstoff nach einem der vorstehenden Ansprüche, **dadurch gekennzeichnet, dass** der jeweilige Anteil von Mangan und Silizium 0,7 -1,3 Masse % beträgt.

4. Gleitlagerwerkstoff nach einem oder mehreren der vorstehenden Ansprüche, **dadurch gekennzeichnet, dass** der Anteil von Zinn 10 bis 20, insbesondere 10 bis 15 Masse %, beträgt.

5. Gleitlagerverbundwerkstoff mit einer hartmetallischen Stützschicht und einer darauf aufgebrachten, insbesondere aufgewalzten metallischen Gleitschicht, **dadurch gekennzeichnet, dass** die Gleitschicht einen Gleitlagerwerkstoff nach einem der vorstehenden Ansprüche umfasst.

## Claims

1. Sliding bearing material made of aluminium alloy containing 10 to 25 wt.% tin, wherein the aluminium alloy consists of tin, silicon and manganese additives, the remainder being aluminium and the proportions of manganese and silicon each amount to 0.2 to 2 wt.% and the ratio of the percentage by weight of manganese to the percentage by weight of silicon is between 0.8 and 1.2.

2. Sliding bearing material according to claim 1, **characterised by** hard material deposits forming the intermetallic phase Mn₃Si₂Al₁₅.

3. Sliding bearing material according to one of the preceding claims, **characterised in that** the proportions of manganese and silicon each amount to 0.7 to 1.3 wt.%.

4. Sliding bearing material according to one or more of the preceding claims, **characterised in that** the proportion of tin amounts to 10 to 20, in particular 10 to 15 wt.%.

5. Sliding bearing material with a hard metallic support layer and a metallic sliding layer applied thereto, in particular rolled thereon, **characterised in that** the sliding layer comprises a sliding bearing material according to one of the preceding claims.

## Revendications

1. Matériau de palier lisse en alliage d'aluminium avec de 10 à 25 % en masse d'étain, ledit alliage d'aluminium se composant d'étain ainsi que de silicium et de manganèse en tant qu'éléments d'addition et, pour le reste, d'aluminium, le manganèse et le silicium étant chacun présents à hauteur de 0,2 à 2 % en masse et le rapport des pourcentages massiques du manganèse et du silicium étant compris entre 0,8 et 1,2.

2. Matériau de palier lisse selon la revendication 1, **caractérisé par** les précipitations de substance dure formant la phase intermétallique Mn₃Si₂Al₁₅.

3. Matériau de palier lisse selon l'une des revendications précédentes, **caractérisé en ce que** les pourcentages respectifs de manganèse et de silicium sont compris entre 0,7 et 1,3 % en masse.

4. Matériau de palier lisse selon l'une au moins des revendications précédentes, **caractérisé en ce que** le pourcentage d'étain est compris entre 10 et 20 % et en particulier entre 10 et 15 % en masse.

5. Matériau de palier lisse avec une couche d'appui en métal dur et une couche de glissement métallique rapportée sur ladite couche d'appui en particulier par laminage, **caractérisé en ce que** la couche de glissement comprend un matériau de palier lisse selon l'une des revendications précédentes.
